# EUROPEAN PATENT APPLICATION

(11) **EP 4 790 522 A1**
(43) Date of publication of application: **12.08.2026**
(21) Application number: 26153572.8
(22) Date of filing: 22.01.2026
(51) Int. Cl.: G06F 3/01, G06F 40/58

(54) **AUTOMATIC BACKGROUND TRANSLATION OF TEXT SEGMENTS CAPTURED IN A REAL-WORLD ENVIRONMENT BY AN ARTIFICIAL REALITY SYSTEM**

(30) Priority: 11.02.2025 US 202519050581
(71) Applicant: Meta Platforms Technologies, LLC, Menlo Park, CA 94025 (US)
(72) Inventor: HONRAO, Chinmay, Menlo Park, 94025 (US); CHOUBEY, Neeraj, Menlo Park, 94025 (US)
(74) Representative: Murgitroyd & Company

(57) **Abstract**

Aspects of the present disclosure relate to automatic background translation of text segments captured in a real-world environment by an artificial reality (XR) system, such as augmented reality (AR) glasses. The AR glasses can use outward-facing cameras to continuously and proactively scan the real-world environment to detect text. If the text is not in the user's base language, the system can automatically translate it into the base language in the background. Inward-facing cameras can detect the user's gaze and determine whether the user has an intent to read the text, e.g., based on a gaze dwell on the text. If the system determines that the user has the requisite intent, the system can seamlessly display the translated text to the user on the augmented display of the AR glasses.

## Description

### TECHNICAL FIELD

The present disclosure is directed to automatic and proactive language translation by an artificial reality (XR) system for an XR environment.

### BACKGROUND

Artificial reality (XR) devices are becoming more prevalent. As they become more popular, the applications implemented on such devices are becoming more sophisticated. Artificial reality applications can provide interactive 3D experiences that combine images of the real-world with virtual objects or that provide an entirely self-contained 3D computer environment. For example, an AR application can be used to superimpose virtual objects over a video feed of a real scene that is observed by a camera. A real-world user in the scene can then make gestures captured by the camera that can provide interactivity between the real-world user and the virtual objects. Mixed reality systems can allow light to enter a user's eye that is partially generated by a computing system and partially includes light reflected off objects in the real-world. AR, MR, and VR experiences (together XR) can be observed by a user through a head-mounted display (HMD), such as glasses or a headset.

### SUMMARY

The present invention provides a method, a computer-readable storage medium and a computing system for automatically translating text from a first language to a second language as defined in the appended claims.

In accordance with a first aspect, there is provided a method for automatically translating text from a first language to a second language, the method comprising:
detecting, by an artificial reality system, one or more text segments, in the first language, in a field-of-view of the artificial reality system in a real-world environment;
automatically translating the one or more text segments from the first language to the second language;
obtaining, by the artificial reality system, user gaze input;
determining an intent to interact with at least a portion of the one or more text segments, in the first language, based on the user gaze input; and
based on the determining the intent to interact with at least the portion of the one or more text segments, selecting, from the automatically translated one or more text segments, one or more translated text segments corresponding to at least the portion of the one or more text segments; and
rendering the at least the selected one or more translated text segments.

The rendering the selected one or more translated text segments may comprise:
positioning the selected one or more translated text segments locked at a location, in the real-world environment, corresponding to a determined location of the at least the portion of the one or more text segments in the first language.

The rendering the selected one or more translated text segments may comprise:
positioning the selected one or more translated text segments locked at a location, in the real-world environment, replacing the at least the portion of the one or more text segments in the first language.

The user gaze input may track movement of at least one eye of a user of the artificial reality system.

The intent to interact may be a gaze dwell, within a threshold distance of the at least the portion of the translated one or more text inputs, for greater than a threshold amount of time.

The user gaze input may track movement of both eyes of the user of the artificial reality system, and
wherein the user gaze input may further comprise vergence depth of the eyes.

The rendering the at least the portion of the translated one or more text segments may comprise audibly announcing the at least the portion of the translated one or more text segments.

The rendering the at least the portion of the translated one or more text segments may comprise displaying the at least the portion of the translated one or more text segments.

The method may further comprise:
selecting a rendering mode, for rendering the at least the portion of the translated one or more text segments, based on one or more contextual factors, the one or more contextual factors comprising one or more preferences for a user of the artificial reality system, one or more situational factors relevant to the real-world environment, or any combination thereof.

The detecting the one or more text segments may be based on one or more first images captured by a first camera, of the artificial reality system, at a first resolution, and
wherein the automatically translating the one or more text segments may be based on one or more second images captured by a second camera, of the artificial reality system, at a second resolution higher than the first resolution.

The method may further comprise:
determining that the second language is different than the first language, the first language being associated with a user of the artificial reality system;
wherein the automatically translating the one or more text segments from the first language to the second language is based on the determination that the second language is different than the first language associated with the user of the artificial reality system.

In accordance with a second aspect, there is provided a computer-readable storage medium storing instructions, for automatically translating text from a first language to a second language, the instructions, when executed by a computing system, cause the computing system to:
detect, by an artificial reality system, one or more text segments, in the first language, in a field-of-view of the artificial reality system in a real-world environment;
automatically translate the one or more text segments from the first language to the second language;
obtain, by the artificial reality system, user input;
determine an intent to interact with at least a portion of the one or more text segments, in the first language, based on the user input; and
based on the determining the intent to interact with at least the portion of the one or more text segments, select, from the automatically translated one or more text segments, one or more translated text segments corresponding to at least the portion of the one or more text segments; and
render the selected one or more translated text segments.

The user input may comprise user gaze input detected by the artificial reality system, and
wherein determining the intent to interact comprises determining that the user gaze input may be directed at the at least the portion of the one or more text segments in the first language.

The user input may comprise gesture input indicative of a gesture made by a user of the artificial reality system, and
wherein determining the intent to interact may comprise determining that the gesture is made within a threshold distance of the at least the portion of the one or more text segments.

The rendering the selected one or more translated text segments may comprise:
positioning the selected one or more translated text segments locked at a location, in the real-world environment, corresponding to a determined location of the at least the portion of the one or more text segments in the first language.

The rendering the selected one or more translated text segments may comprise:
positioning the selected one or more translated text segments locked at a location, in the real-world environment, replacing the at least the portion of the one or more text segments in the first language.

In accordance with a third aspect, there is provided a computing system for automatically translating text from a first language to a second language, the computing system comprising:
one or more processors; and
one or more memories storing instructions that, when executed by the one or more processors, cause the computing system to:
   detect, by an artificial reality system, one or more text segments, in the first language, in a field-of-view of the artificial reality system in a real-world environment;
   automatically translate the one or more text segments from the first language to the second language;
   obtain, by the artificial reality system, user input;
   determine an intent to interact with at least a portion of the one or more text segments, in the first language, based on the user input; and
   based on the determining the intent to interact with at least the portion of the one or more text segments, select, from the automatically translated one or more text segments, one or more translated text segments corresponding to at least the portion of the one or more text segments; and
   render the selected one or more translated text segments.

The user input may comprise user gaze input tracking movement of at least one eye of a user of the artificial reality system.

The intent to interact may be a gaze dwell, within a threshold distance of the at least the portion of the translated one or more text inputs, for greater than a threshold amount of time.

The user gaze input may track movement of both eyes of the user of the artificial reality system, and
wherein the user gaze input may further comprise vergence depth of the eyes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for automatically translating text from a first language to a second language.
Figure 6A is a conceptual diagram illustrating an example real-world environment including an artificial reality (XR) system and text within its field of view.
Figure 6B is a conceptual diagram illustrating an example XR environment in which an XR system has rendered automatically translated text in a second language, corresponding to text in a first language, based on gaze of a user.
Figure 6C is a conceptual diagram illustrating an example XR environment in which an XR system has rendered automatically translated text in a second language, overlaid onto text in a first language, based on gaze of a user.
Figure 6D is a conceptual diagram illustrating an example XR environment in which an XR system has audibly announced automatically translated text in a second language, corresponding to text in a first language, based on gaze of a user.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure relate to automatic background translation of text segments captured in a real-world environment by an artificial reality (XR) system. The XR system can use outward-facing cameras to continuously and proactively scan the real-world environment to detect text. If the text is not in the user's base language, the system can automatically translate it into the base language in the background (e.g., without user input prompting the translation). Inward-facing cameras can detect the user's gaze and determine whether the user has an intent to read the text, e.g., based on a gaze dwell on the text. If the system determines that the user has the requisite intent, the system can seamlessly display the translated text to the user on the augmented display of the XR system.

For example, a user can traverse a real-world environment wearing augmented reality (AR) glasses that present a see-through view of the real world surrounding the user, and which are capable of displaying virtual objects overlaid on the see-through view. The AR glasses can periodically or continuously scan the real-world environment, capturing images at a relatively low resolution, and perform text detection to determine whether text is within the field-of-view of external-facing cameras of the AR glasses and/or what the user can see through the AR glasses. If text is detected in the field-of-view, the AR glasses can capture higher resolution images allowing for text recognition to be performed (e.g., optical character recognition) and convert the images of text into a machine-readable textual format. The AR glasses can then automatically detect the source language of the text, determine a base language of the user of the AR glasses (e.g., as determined from a user profile and/or as automatically determined based on detected speech of the user), and translate the text from the source language to the user's base language "in the background," i.e., without user input requesting the translation and/or without notifying the user that the translation has been performed. The AR glasses can then cache, or otherwise store, the translated text.

The AR glasses can then receive user input and determine whether such user input is indicative of an intent to interact with at least a portion of the text segments in the real-world environment. The user input can include, for example, gaze input, gesture input, audio input, or any combination thereof. For example, the AR glasses can determine that the user has gazed at a particular sign with text in the real-world environment for greater than a threshold amount of time (e.g., 2 seconds). Based on this determined intent to interact, the AR glasses can select the portion of the previously translated text corresponding to the sign in the real-world environment, and automatically and selectively display the previously translated text at a location in the real-world environment corresponding to or at the location of the original text on the sign.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

The implementations provided herein provide specific technological improvements in the technical fields of both artificial reality and language translation. An automatic translation system described herein can automatically detect text in a real-world environment, detect a source language of the text, determine a spoken language of a user, and translate the text from the source language to the spoken language of the user in the background, without notifying the user that the translation has occurred and without user input requesting the translation. Upon detection of an interaction with a portion of the text (e.g., a user touching an object including text), the automatic translation system can then automatically render translated text corresponding to that portion of the text overlaid onto the original text.

By automatically translating detected text, without a user indication to do so, the translated text can later be displayed (e.g., upon detection of a user interaction) faster than if the text were translated only after the detected user interaction, thereby improving latency time in displaying the translation, and correspondingly, improving the user experience. Further, the automatic translation system can select and only selectively render translated text corresponding to a portion of original text, in the real-world environment, at a location (or within a threshold distance of the location) at which a user interaction has occurred (e.g., within a threshold distance of a gaze point in the real-world environment). Thus, the automatic translation system can conserve display and power resources by only displaying the translated text the user desires to see at a particular moment, without draining resources by displaying translated text the user is not interacting with. Further, by not crowding the display lenses with unnecessary translated text, the user can more safely traverse the real-world environment while accessing the XR environment.

In some implementations, the automatic translation system can use two different cameras (or two different camera settings) to optimize power, memory, and processing resources: a first camera (or camera setting) that captures lower resolution images to perform text detection, and a second camera (or camera setting) that is activated upon detection of text by the first camera and that captures higher resolution images to perform text recognition. Thus, the XR system's resources can be conserved by only capturing expensive higher resolution images as needed and on demand to accurately recognize text, and otherwise using inexpensive lower resolution images to perform text detection, which can be accurately performed without high resolution.

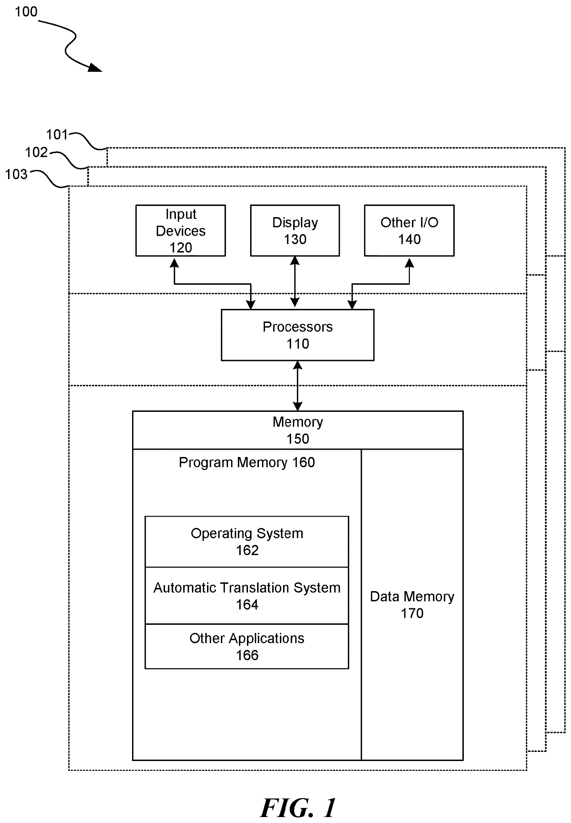

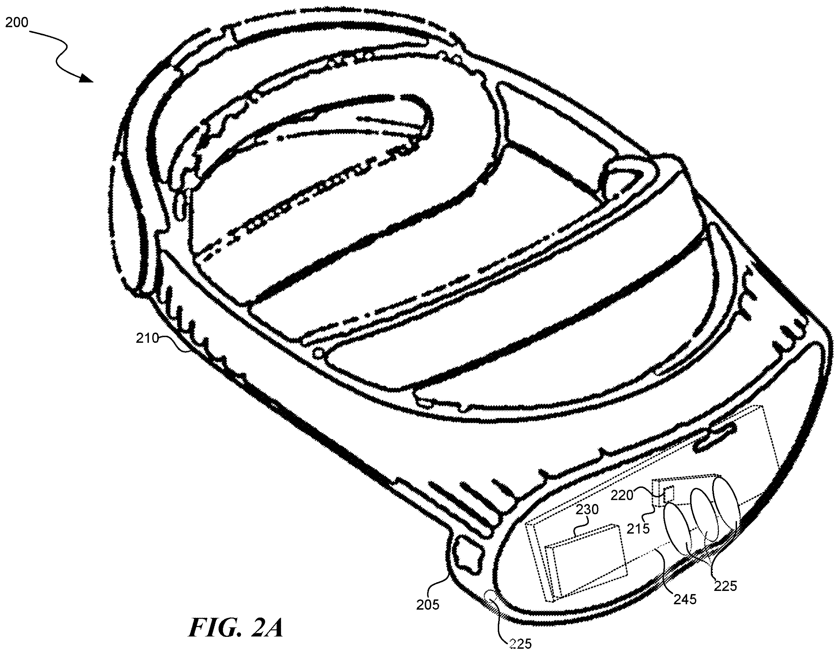

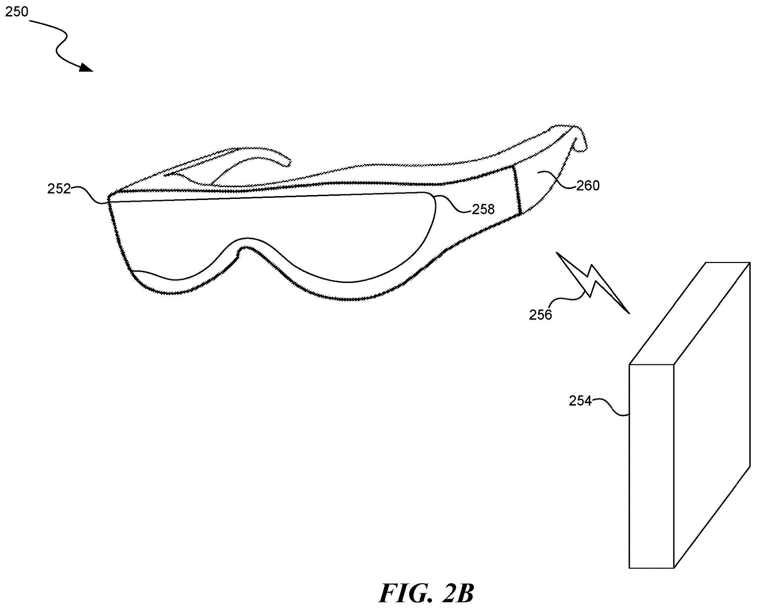

Several implementations are discussed below in more detail in reference to the figures. Figure 1 is a block diagram illustrating an overview of devices on which some implementations of the disclosed technology can operate. The devices can comprise hardware components of a computing system 100 that can automatically translate text between languages. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, automatic translation system 164, and other application programs 166. Memory 150 can also include data memory 170 that can include, e.g., text data, language data, translation data, user input data, interaction data, mapping data, rendering data, configuration data, settings, user options or preferences, etc., which can be provided to the program memory 160 or any element of the computing system 100.

In various implementations, the technology described herein can include a non-transitory computer-readable storage medium storing instructions, the instructions, when executed by a computing system, cause the computing system to perform steps as shown and described herein. In various implementations, the technology described herein can include a computing system comprising one or more processors and one or more memories storing instructions that, when executed by the one or more processors, cause the computing system to steps as shown and described herein.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. In this example, HMD 200 also includes augmented reality features, using passthrough cameras 225 to render portions of the real world, which can have computer generated overlays. The HMD 200 includes a front rigid body 205 and a band 210. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200.

The electronic display(s) 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

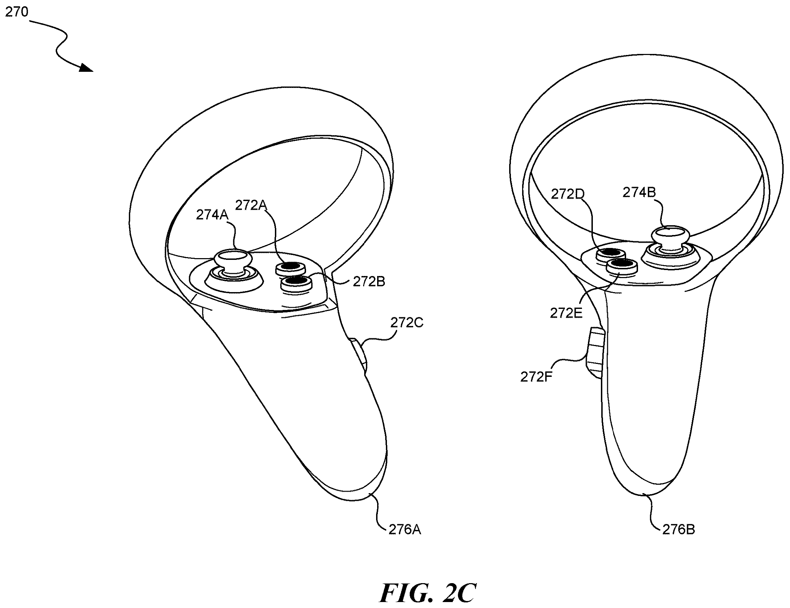

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction and/or point in the user's field-of-view at which the user is looking.

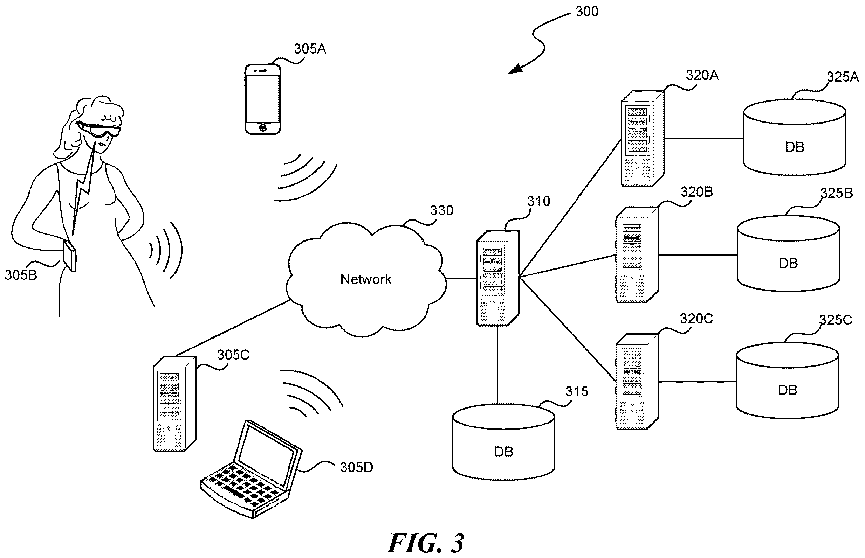

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

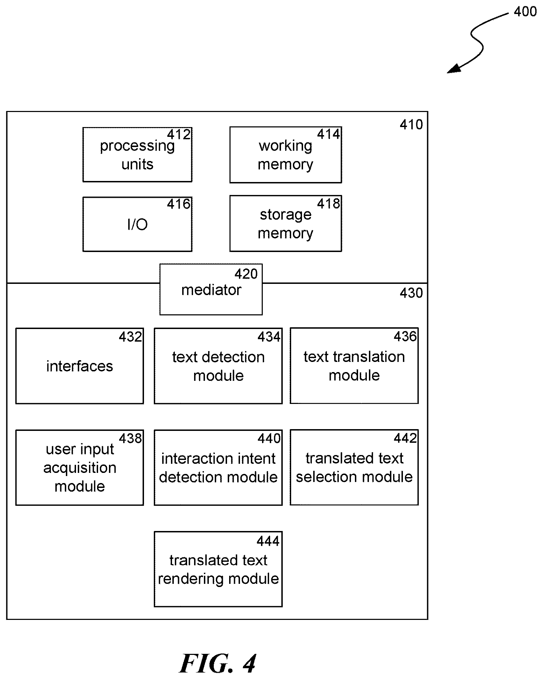

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for automatically translating text between languages. Specialized components 430 can include text detection module 434, text translation module 436, user input acquisition module 438, interaction intent detection module 440, translated text selection module 442, translated text rendering module 444, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

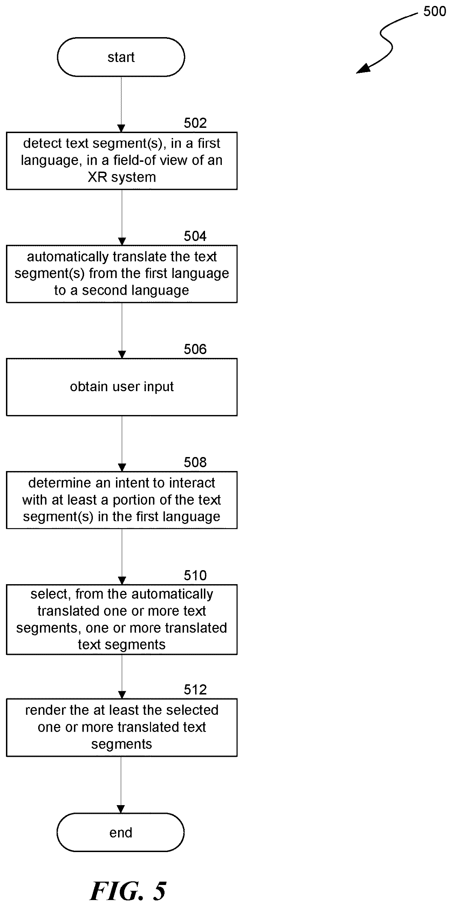

Text detection module 434 can detect one or more text segments, in a first language, in a field-of-view of an XR system in a real-world environment. Text detection module 434 can detect the one or more text segments from one or more images captured via one or more cameras, e.g., as included in input and output devices 416, and perform text detection on the one of more images. In some implementations, text detection module 434 can detect the text based on inherent features of text and/or characters, e.g., fonts, shapes of letters and/or characters, spacings, lengths of words and/or sentences, format of text blocks, punctuation, and/or any other detectable visual features of text and/or characters. In some implementations, text detection module 434 can detect the one or more text segments from one or more relatively low resolution cameras and/or camera settings, and upon detection, capture one or more higher resolution images upon which to perform text recognition (e.g., optical character recognition), which may require greater accuracy. The first language can include any written language, such as English, Japanese, Chinese, French, Spanish, German, etc. Further details regarding detecting text segment(s) in a first language, in a field-of-view of an XR system in a real-world environment, are described herein with respect to block 502 of Figure 5.

Text translation module 436 can automatically translate the one or more text segments from the first language to a second language. In some implementations, text translation module 436 can determine that the first language is a language not spoken and/or understood by a user of the XR system, and/or is a language different than a default and/or selected language for the user of the XR system (e.g., the "second language"). In some implementations, text translation module 436 can determine the second language, corresponding to the user of the XR system, from a user profile indicating the user's preferred language(s), based on previous interactions of the user with the XR system (e.g., a language detected by the XR system from the user's speech, based on a user not correcting a default language used by the XR system, etc.), and/or the like. Text translation module 436 can automatically translate the one or more text segments "in the background," e.g., without user instruction to perform the translation and/or without indicating to the user that the translation has been performed (for example, without then immediately displaying the translated text as it is being translated or after it is translated). In some implementations, text translation module 436 can translate all of the text segments in the first language within its field-of-view in the background. Further details regarding automatically translating text segment(s) from a first language to a second language are described herein with respect to block 504 of Figure 5.

User input acquisition module 438 can obtain user input. User input acquisition module 438 can obtain input from any suitable input device and/or input component, such as camera(s), button(s), microphone(s), etc., which can be included in input and output devices 416. In some implementations, user input acquisition module 438 can obtain user gaze input, e.g., image(s) of the eye(s) of the user indicative of a gaze direction and/or gaze point in the real-world environment. In some implementations, user input acquisition module 438 can obtain user gesture input, e.g., image(s) of the hand(s) of the user indicative of position and/or pose of the hand(s) in the real-world environment. In some implementations, user input acquisition module 438 can obtain user audible input, e.g., sound wave(s) capturing the voice of the user giving command(s). Further details regarding obtaining user input are described herein with respect to block 506 of Figure 5.

Interaction intent detection module 440 can determine an intent to interact with at least a portion of the one or more text segments, in the first language and in the real-world environment, based on the user input. In some implementations, the intent can be an intersection of the gaze direction and/or gaze point, of the user gaze input, with a portion of the text segment(s). In some implementations, the intent can be a proximity of the user's hand to a portion of the text segment(s) (e.g., within a threshold distance of a portion of the text segment(s), such as 5 cm). In some implementations, the intent can be a gesture and/or movement of the user's hand toward a portion of the text segment(s), and/or a particular posture of the user's hand (e.g., pointing forward a portion of the text segment(s)). In some implementations, the intent can be an audible command relative to a portion of the text segment(s), e.g., "translate all of the text in my field-of-view." In some implementations, the intent can include any combination of such user input. Further details regarding determining an intent to interact with at least a portion of text segment(s), in a first language, based on user input are described herein with respect to block 508 of Figure 5.

Translated text selection module 442 can, based on the determining the intent to interact with at least the portion of the one or more text segments by interaction intent detection module 440, select, from the translated one or more text segments in the second language, one or more translated text segments corresponding to the at least the portion of the one or more text segments in the first language. For example, translated text selection module 442 can determine the portion of the text segment(s) (in the first language) to which the intent to interact corresponds, and locate and obtain the corresponding translated text segment(s) (in the second language). Translated text selection module 442 can further obtain the selected one or more translated text segments from storage. Further details regarding selecting translated text segment(s) corresponding to at least a portion of text segment(s) in a first language are described herein with respect to block 510 of Figure 5.

Translated text rendering module 444 can render the one or more translated text segments selected by translated text selection module 442. In some implementations, translated text rendering module 444 can present the translated text segment(s) audibly, such as by reading the translated text segment(s) by an artificial intelligence (Al)-generated voice and outputting them via one or more speakers, such as may be included in input and output devices 416. In some implementations, translated text rendering module 444 can present the translated text segment(s) visually by rendering them on the display of the XR system. In some implementations, translated text rendering module 444 can display the translated text segment(s) in a world-locked position in the real-world environment, e.g., at a static position in the real-world environment that is unchanged by movement of the display and/or the user of the XR system. In some implementations, translated text rendering module 444 can display the translated text segment(s) at a location corresponding to the original text segment(s) (e.g., within a threshold distance of the original text segment(s), with one or more virtual objects indicating the location of the original text segment(s), etc.). In some implementations, translated text rendering module 444 can display the translated text segment(s) overlapping the original text segment(s), e.g., replacing the original text segment(s) in the XR environment such that the original text segment(s) are obscured by the translated text segment(s). Further details regarding rendering selected translated text segment(s) are described herein with respect to block 512 of Figure 5.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for automatically translating text between languages. In some implementations, some or all of process 500 can be performed by an XR system including one or more XR devices, e.g., an XR head-mounted display (HMD) (such as XR HMD 200 of Figure 2A and/or XR HMD 252 of Figure 2B), one or more external processing components, etc. In some implementations, at least some of process 500 can be performed by one or more computing systems remote from the XR system, such as a cloud or edge computing system, that are in operable communication with the XR system. For example, one or more components of an XR system (e.g., an XR head-mounted display (HMD)) can perform the text detection, input detection, and rendering steps described below relative to blocks 502, 506, and 512, while one or more remote servers and/or one or more other components of an XR system (e.g., external processing components) can perform one or more of the processing steps described below relative to blocks 504, 508, and/or 510.

In some implementations, process 500 can be performed upon detection of text segment(s) in a field-of-view, of an XR system, in a real-world environment. In some implementations, process 500 can be performed as the text segment(s) remain within the field-of-view of the XR system. For example, if the text segment(s) move outside the field-of-view of the XR system, process 500 can end without proceeding to the next block. In some implementations, process 500 can be performed upon detection of text segment(s) in the field-of-view for more than a threshold amount of time, e.g., 2 seconds.

At block 502, process 500 can detect one or more text segments, in a first language, in a field-of-view of an XR system in a real-world environment. The field-of-view can correspond to an area in the real-world environment capturable by camera(s) of the XR system, and/or can correspond to an area in the real-world environment visible by the wearer of the XR system, either in see-through or pass-through, such as based on the location, position, and/or orientation of the user's body and head. Process 500 can use outward facing camera(s) to capture image(s) of the real-world environment, then perform text detection and/or recognition on the image(s), such as optical character recognition. The text segment(s) can be detected from a physical object in the real-world environment that are printed with, or otherwise display, the text segment(s), such as an inert object (e.g., a sign, a book, a pamphlet, a menu, a box, a package, etc.), an electronic display (e.g., a computer, a mobile device, a television, etc.), and/or the like.

In some implementations, process 500 can automatically detect the source language (i.e., the "first language" as used herein) of the one or more text segments. In some implementations, process 500 can automatically determine the source language by polling the XR system for its current location, e.g., as determined by one or more location detection components (e.g., a global positioning system (GPS) sensor), as determined from a user profile corresponding to the user of the XR system, as determined from user input prior to performance of process 500, etc., and correlating its current location to the source language. In some implementations, process 500 can automatically determine the source language by applying neural machine translation (NMT).

At block 504, process 500 can automatically translate the one or more text segments from the first language (i.e., the source language) to a second language (e.g., a user's base language). In some implementations, process 500 can perform the translation based on a determination that the second language is different than the first language, e.g., that the one or more text segments are in a language not spoken and/or understood by the XR system's user. In some implementations, process 500 can determine that the second language is different than the first language by comparing the automatically identified first language to a base language selected by the user prior to performing process 500, e.g., based on a user profile, user preferences, a user selection during set up of the XR system, etc. In some implementations, the base language can be set by default upon activation of the XR system, and process 500 can select the default language as the base language based on lack of correction of the default language by the user. In some implementations, process 500 can automatically select the base language based on one or more user actions, e.g., by analyzing previous oral and/or textual commands provided to the XR system and detecting the base language used by the user in such actions. In some implementations, process 500 can automatically translate the one or more text segments from the first language to the second language by applying machine translation (e.g., neural machine translation), computer-assisted translation (CAT), etc. In some implementations, process 500 can perform the translation via integrations with one or more third party translation tools.

In some implementations, process 500 can periodically sample the field-of-view of the XR system to detect, recognize, and/or translate text segment(s). The sampling time and/or rate can be static (e.g., every 3 seconds) or can be variable based on one or more triggers. For example, the trigger can be greater than a threshold amount of movement of the user's head (e.g., as indicated by one or more sensors of an inertial measurement unit (IMU)), on which the XR system is located, indicating that the user has a new viewpoint and that the field-of-view of the XR system has been changed. In such implementations, process 500 can track the location of text segment(s) as and/or after movement has occurred to determine overlapping points, such that later rendering of translated text segments (described below) corresponds to the same location in the real-world environment and relative to the original, untranslated text while or after movement occurs.

In some implementations, detecting the one or more text segments is based on one or more first images captured by a first camera, of the XR system, at a first resolution, and automatically translating the one or more text segments is based on one or more second images, captured by a second camera of the XR system, at a second resolution higher than the first resolution. For example, process 500 can use a relatively low power and/or low resolution camera to capture image(s) (e.g., black and white images) from which to perform text detection, and, upon detection of text, can activate a relatively higher power and/or higher resolution camera (e.g., RGB images) to capture image(s) from which to perform text recognition and translation. In some implementations, the first camera and second camera can be a same, single camera with multiple power and/or resolution settings, or can be different cameras. By performing text detection at a lower power and/or resolution, then switching to higher power and/or higher resolution to perform text recognition, process 500 can conserve power on the XR system, while ensuring that the text is recognized accurately when needed.

In some implementations, process 500 can automatically perform the text detection, first language identification, second language identification, and/or translation "in the background," e.g., without user input requesting the translation, selecting the first language, selecting the second language, and/or the like. In some implementations, while performing one or more of such steps in the background, the XR system does not alert the XR system's user, thereby not affecting any XR experience being accessed on the XR system. Thus, the XR system's user can remain unaware that the XR system is scanning the real-world environment for text while the user is looking around and/or traversing the real-world environment, and/or while the XR environment and/or real-world environment is being accessed by the user.

At block 506, process 500 can obtain user input. In some implementations, the user input can be selection of a physical button on the XR system and/or virtual button displayed by the XR system. In some implementations, the user input can include gaze input indicative of the position of the eye(s) of the user. The gaze input can track movement of at least one eye of a user of the XR system to determine a direction in the real-world environment at which the gaze is directed. In some implementations, the gaze input can track movement of both eyes of the user of the XR system, and can further include vergence depth of the eyes to additionally determine a depth in the real-world environment, relative to the user's eye, where the gaze is directed. For example, an eye tracking sub-system can identify a gaze direction relative to an XR head-mounted device (HMD) by modeling one or both of the user's eyes to determine a gaze direction vector, often along the line connecting the user's fovea and the center of the user's pupil, e.g., based on factors such as images capturing a circle of lights (i.e., "glints") reflected off the user's eye. In some implementations, the user input can further include a gaze dwell time, e.g., a duration of time for which the user's gaze remains within a threshold distance of a particular location of the real-world environment. In some implementations, it is contemplated that the images of the eye(s) can be captured by one or more cameras, integral with or in operable communication with the XR system, facing the eye(s) of the user of the XR system.

In some implementations, the user input can include gesture input indicative of a movement or posture made by a user of the XR system. In some implementations, the gesture input can be captured by, for example, one or more cameras, integral with or in operable communication with the XR system, collecting image(s) facing away from the face of the user of the XR system. Such image(s) can include, for example, image(s) of the user's hand(s) in various poses and/or positions. In some implementations, the gesture input can be alternatively or additionally captured by one or more electromyography (EMG) sensors, such as may be included in a wearable device (e.g., a smart bracelet) in operable communication with the XR system. In some implementations, the gesture input can alternatively or additionally be captured by one or more depth sensors and/or one or more sensors of an inertial measurement unit (IMU) integral with or in operable communication with the XR system.

In some implementations, the user input can include audible input indicative of one or more words spoken by the user of the XR system. In some implementations, the audible input can be captured by, for example, one or more microphones integral with or in operable communication with the XR system. In some implementations, process 500 can transcribe the audible input and perform natural language processing techniques to convert the audible input into a machine-readable textual format. In some implementations, the user input can include any combination of button input, gaze input, gesture input, and/or audible input.

At block 508, process 500 can determine an intent to interact with at least a portion of the one or more text segments, in the first language, based on the user input. In some implementations in which the user input includes selection of a physical or virtual button on the XR system, the intent to interact can be capturing of a photo and/or video including text segment(s). In some implementations in which the user input includes gaze input, the intent to interact can be a gaze dwell, within a threshold distance of the one or more text segments, for greater than a threshold amount of time. As noted above, process 500 can determine the location of the gaze dwell based on gaze direction and/or vergence depth of the eyes relative to the real-world environment (and, in some cases, text segment(s) in the real-world environment). In some implementations, the gaze dwell position can be based on both head tracking (e.g., via IMU data indicating pitch, roll, and yaw movements) and eye tracking (e.g., where a camera captures images of the user's eye(s) to determine a direction of the user's gaze and/or vergence depth). In some implementations, process 500 can determine the duration of the gaze dwell using a dwell timer, which can begin counting down (e.g., from three seconds) when the gaze does not move more than a threshold amount for at least a threshold amount of time (e.g., when the user's gaze remains relatively fixed for at least one second). In some implementations, the gaze input can be a threshold number of detected interactions of the gaze, e.g., the user looks at a particular area of text more than 5 times, which, in some implementations, can be over a specified time period (e.g., 30 seconds).

In some implementations in which the user input includes gesture input, determining the intent to interact can include determining that a particular gesture (e.g., a movement, a posture of the user's hand, etc.) is made in the field-of-view of the XR system (e.g., pointing, circling with a hand or finger, pinching, etc.). In some implementations, determining the intent to interact can include determining that a gesture is made in proximity of (e.g., within a threshold distance of) or toward the portion of the one or more text segments in the first language. Process 500 can identify the gesture in proximity of and/or toward the text segment(s) by, for example, using one or more cameras as discussed above. The one or more cameras can capture images of the physical hand moving toward a location in the real-world environment corresponding to the text segment(s). In some implementations, process 500 can identify a gesture away from the user and toward the text segment(s) using one or more depth sensors integral with or in operable communication with the XR system. In some implementations, process 500 can identify the posture of the hand similarly to how process 500 identifies the physical hand, such as by capturing images and performing object recognition, using machine learning models trained on images of particular hand postures, etc.

In some implementations in which the user input includes audible input, process 500 can determine the intent to interact based on particular announced word(s) and/or sound(s) associated with a command. In some implementations, and as noted above process 500 can transcribe the audio input into machine-readable text, and parse the text using, e.g., natural language processing techniques to determine an intent to interact with the text segment(s). For example, the announcement can include the words, "translate the text in my field-of-view." In some implementations, process 500 can apply object detection and/or recognition to object(s) in the field-of-view to determine an intent to interact with particular text segment(s) based on an announcement, e.g., "translate the text on the yellow poster." In some implementations, process 500 can combine button input, gaze input, gesture input, and/or audible input to determine the intent to interact and/or with which text segment(s) the intent to interact corresponds to, such as when the user says "translate the text here" and uses gaze dwell and/or a gesture to indicate the particular location of text segment(s).

At block 510, process 500 can, based on the determined intent to interact, select, from the automatically translated one or more text segments, one or more translated text segments corresponding to the at least the portion of the one or more text segments in the first language indicated by the intent to interact. In some implementations, process 500 can select the one or more translated text segments corresponding to the text segment(s) in the first language based on the location of the user input. In some implementations, process 500 can select the one or more translated text segment(s) corresponding to the word(s) being interacted with or having a corresponding intent to interact, such as a sentence being circled by a hand gesture, word(s) within a particular captured photograph, etc.

In some implementations, process 500 can determine which text segment(s) to select from the translation based on a particular command being made relative to the field-of-view (or at some point being within the field-of-view) of the XR system and/or relative to a particular object, e.g., an audible announcement of "translate everything on this menu." In another example, process 500 can determine which translated text segment(s) to select based on all or a portion of the continuous untranslated text segment(s) around the location of the user input (e.g., a sentence surrounding a particular word gazed at, a particular number of sentences around a particular word gazed at, etc.). In still another example, process 500 can determine which translated text segment(s) to select based on all or a portion of the original untranslated text segment(s) that are within a threshold distance of the location of the user input, e.g., within 0.2 meters of a gaze location. In some implementations, process 500 can determine which translated text segment(s) to select by applying natural language processing, a large language model, and/or other machine learning techniques to identify original untranslated and/or translated text having a same topic or otherwise having a particular association with the portion of the text being interacted with (e.g., select translated text segment(s) corresponding to all of the directions for performing a task when the gaze is at a part of the directions).

At block 512, process 500 can render the selected one or more translated text segments. As noted above, the selected one or more translated text segments were previously translated "in the background" prior to any user input being received, thus minimizing delay (e.g., latency) between identifying the intent to interact with particular text segment(s) in an original language and rendering their translation. In other words, rendering of the translation can be faster than other translation techniques, as the text detection, language identification, and translation need not be prepared "on demand" based on the intent to interact, but are instead proactively translated, without a user trigger, and cached (or otherwise stored in memory) for fast and efficient retrieval and rendering..

In some implementations, rendering the selected one or more translated text segments includes displaying the selected one or more translated text segments. In some implementations, rendering the selected one or more translated text segments can include positioning the selected one or more translated text segments at a "world-locked" location. As used herein, translated text segment(s) in the XR environment can be "world-locked" (i.e., locked to one or more locations in the real-world and/or XR environment and unaffected by movement of the user's body) or "head-locked" (i.e., locked to a particular position on the display of the XR system, and thus following movement of the user's head in the case of a head-mounted display). In some implementations, the "world-locked" location in the real-world environment can correspond to a determined location of the portion of the one or more text segments in the first language that were detected by the XR system. As used herein, the translated text segment(s) "corresponding" to the determined location of the original, untranslated text segment(s) can include placing the translated text segment(s) within a threshold distance of the original text segment(s) in the real-world environment, associating the translated text segment(s) with the original text segment(s) (e.g., displaying a text bubble with the translated text segment(s) and an arrow indicating the location of the original corresponding text segment(s)), etc. In some implementations, the "world-locked" location in the real-world environment can be at a position replacing the portion of the one or more text segments in the first language, e.g., overlapping with and/or obscuring the one or more text segments in the first language. In some implementations, rendering the selected one or more translated text segments can include audibly announcing the selected one or more translated text segments, e.g., via a speaker, in the second language.

In some implementations, prior to rendering the selected one or more translated text segments, process 500 can select a rendering mode, for rendering selected one or more translated text segments, based on one or more contextual factors. The rendering modes can include, for example, a visual rendering mode and/or an audio rendering mode. The one or more contextual factors can include one or more preferences for a user of the XR system (e.g., whether audio and/or visual output is preferred, either based on an indication by the user or based on a prediction), one or more situational factors relevant to the real-world environment, or any combination thereof. An exemplary situational factor can include, for example, whether the user's vision will be obstructed by the translated text (e.g., the translated text will occupy greater than a threshold amount of the user's field-of-view), in which case process 500 can select an audio mode. Another exemplary situational factor can include whether the user is having or listening to a spoken conversation or other audio content (e.g., listening to music), in which case process 500 can select a visual mode. In some implementations, a machine learning model can receive situational factors as input (e.g., privacy factors, ambient noise level, safety factors such as whether a user needs to have a clear view of the real-world environment, etc.), and select either an audio or visual mode for rendering, and/or can adjust the size of a visual rendering and/or volume of an audio rendering.

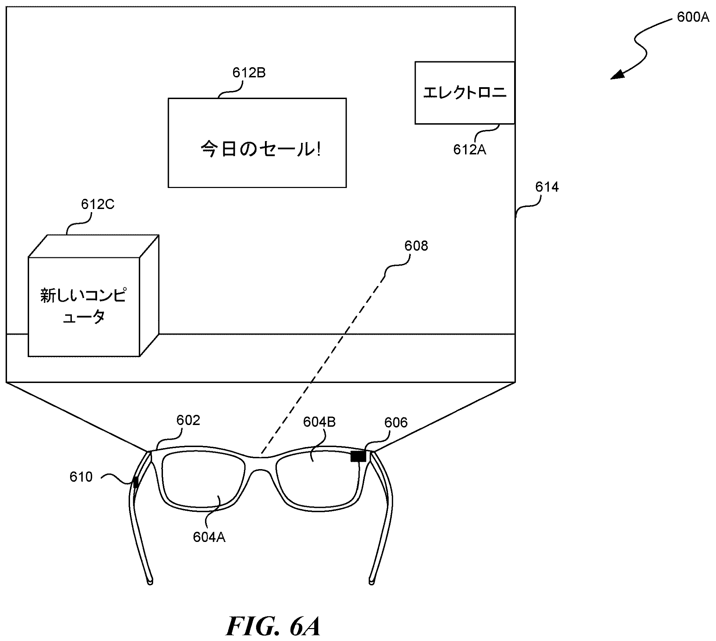

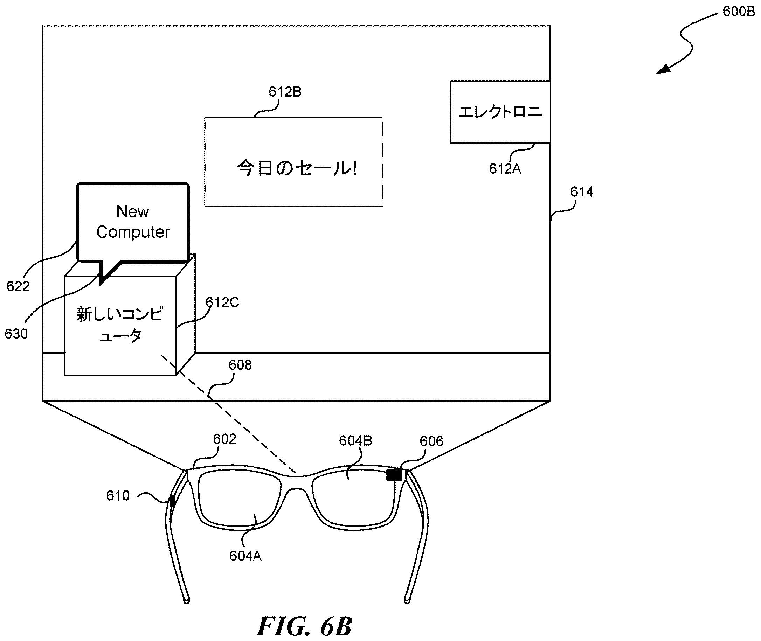

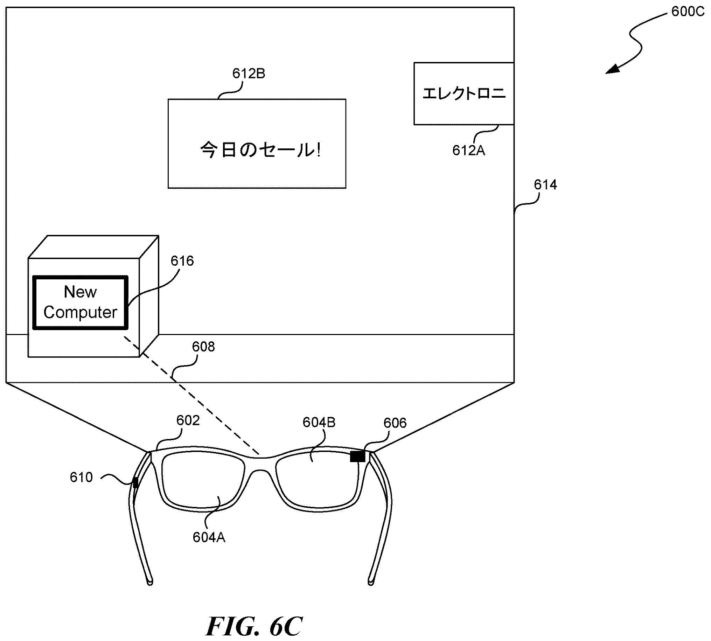

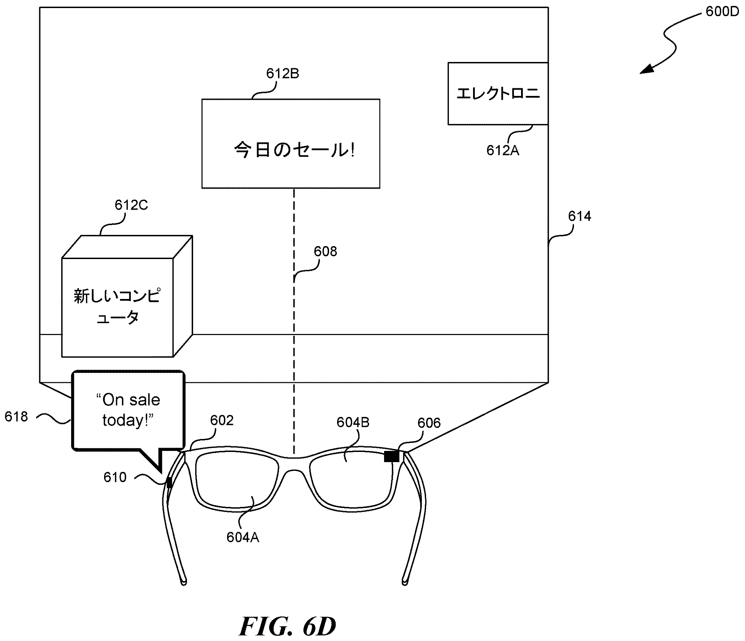

Figure 6A is a conceptual diagram illustrating an example real-world environment 600A including an artificial reality (XR) system 602 and text segments 612A-612C within its field-of-view 614. In this example, XR system 602 can be augmented reality (AR) glasses configured to render translated text segments over a see-through view of real-world environment 600A (i.e., a view seen by the user's eyes through lenses 604A, 604B of XR system 602). For example, lenses 604A, 604B can be transparent waveguide lenses configured to project light into a user's eyes to cause the user to see one or more virtual objects overlaid onto real-world environment 600A, such as translated text segments. XR system 602 can include eye tracking module 606, which can include a camera and light source (e.g., infrared light), that can illuminate glints (e.g., small flashes of light) on the user's eyes, take pictures of the user's eyes, and uses a trained machine learning model to interpret the images into a gaze direction (indicated by line 608). In some implementations, XR system 602 can further include speaker 610 configured to make audible announcements to the user, such as is described further herein with respect to Figure 6D. In some implementations, XR system 602 can further include a head tracking unit (not shown) which can use, e.g., a gyroscope, magnetometer, and accelerometer to determine a direction and movement of XR system 602, which XR system 602 can translate into a camera position in real-world environment 600A from which to position and/or display virtual objects for XR environment 600B of Figure 6B and 600C of Figure 6C, which XR system 602 can use to determine whether to trigger text detection, etc.

XR system 602 can further include one or more outward facing cameras (not shown) that face away from the user of XR system 602 and that are configured to capture field-of-view 614. In some implementations, upon a trigger (e.g., based on a periodic timer, based on movement of XR system 602 above a threshold, etc.), XR system 602 can scan real-world environment 600A to determine whether text is present in field-of-view 614, such as by performing text detection on one or more images captured by an outward facing camera. In some implementations, XR system 602 can continuously scan real-world environment 600A to determine whether text is present in field-of-view 614.

In the example shown in Figure 6A, upon detection of any one or more of text segments 612A-612C within field-of-view 614, XR system 602 can automatically translate text segments 612A-612C "in the background," e.g., without user input instructing XR system 602 to perform such a translation, without notifying the user that the translation is being performed, regardless of the location of the user's gaze indicated by line 608, and/or without automatically rendering the translation while text segments 612A-612C are being translated and/or after the translation is complete. In some implementations, XR system 602 can automatically detect that the source language (e.g., "first language" as used herein) is Japanese, and that the user's base language (e.g., "second language" as used herein) is English, and translate text segments 612A-612C from Japanese to English.

Although illustrated with a single eye tracking module 606 and speaker 610, it is contemplated that XR system 602 can include any number of speakers and/or eye tracking modules. For example, XR system 602 can include an additional eye tracking module on an opposite side of XR system 602 in order to track movement of both eyes of the user, such as to determine vergence depth of the user's gaze. In another example, XR system 602 can include an additional speaker on an opposite side of XR system 602 in order to make audible announcements proximate to both ears of the user, which can include either mono or stereo audio.

Figure 6B is a conceptual diagram illustrating an example XR environment 600B in which an XR system 602 has rendered an automatically translated text segment 622 in a second language (e.g., English), corresponding to a text segment 612C in a first language (e.g., Japanese), based on gaze of a user (indicated by line 608). As described above, eye tracking module 606 can illuminate the user's eye, take pictures of the user's eye, and interpret the images into a gaze direction (indicated by line 608). In Figure 6B, the gaze direction (indicated by line 608) is toward text segment 612C and/or within a threshold distance of text segment 612C. In some implementations, XR system 602 can alternatively or additionally determine a point in XR environment 600B at which the user is looking, such as using multiple eye tracking modules 606 and determining vergence depth of the eyes.

Based on this determination of the user's gaze relative to text segment 612C (and, in some implementations, the gaze remaining within a threshold distance of text segment 612C for greater than a predetermined amount of time), XR system 602 can select previously translated text segment 622, corresponding to text segment 612C, and automatically display translated text segment 622. Because text segment 612C was already translated into text segment 622, processing delays in translating and displaying text segment 622 upon detection of the gaze direction relative to text segment 612C (indicated by line 608) can be reduced and/or minimized relative to translating and displaying text segment 622 "on demand." Further, based on the gaze direction (indicated by line 608), XR system 602 can selectively display only translated text segment 622 corresponding to original text segment 612C, and does not display translations of text segments outside of a threshold distance of the gaze direction, on objects other than the object on which text segment 612C is located, etc., such as translations corresponding to text segments 612A and 612B.

In XR environment 600B, XR system 602 can display translated text segment 622 "corresponding to" original text segment 612C, e.g., at a world-locked location in XR environment 600B determined by the location of original text segment 612C. In this example, translated text segment 622 can be displayed as a text bubble proximate to (e.g., within a threshold distance of) original text segment 612C in XR environment 600B. In this example, translated text segment 622 can further have a directional indicator 630 pointing to the location of original text segment 612C from which the translation has been displayed.

Figure 6C is a conceptual diagram illustrating an example XR environment 600C in which an XR system 602 has rendered automatically translated text segment 616 in a second language (e.g., English), overlaid onto an original text segment in a first language (e.g., Japanese), based on gaze of a user (indicated by line 608). Similar to that described above with respect to Figure 6B, eye tracking module 606 can illuminate the user's eye, take pictures of the user's eye, and interpret the images into a gaze direction (indicated by line 608). In Figure 6C, as in Figure 6B, the gaze direction (indicated by line 608) is toward text segment 612C and/or within a threshold distance of text segment 612C. However, in exemplary XR environment 600C, XR system 602 can display translated text segment 616 as an opaque virtual object over original text segment 612C (not shown in Figure 6C), thereby obscuring original text segment 612C from the user's view.

Figure 6D is a conceptual diagram illustrating an example XR environment 600D in which an XR system 602 has audibly announced an automatically translated text segment 618 in a second language (e.g., English), corresponding to a text segment 612C in a first language (e.g., Japanese), based on gaze of a user (indicated by line 608). Relative to Figures 6B and 6C, the user has shifted their gaze from text segment 612C to text segment 612B. In some implementations, XR system 602 can determine that it should audibly announce the translation, rather than display the translation, such as based on one or more contextual and/or situational factors, user preferences, etc., as described further herein. Thus, XR system 602 can select and obtain previously translated text segment 618, corresponding to original text segment 612B, and read aloud translated text segment 618 via speaker 610, e.g., "On sale today!". Although shown and described in exemplary Figures 6A-6D as determining an intent to interact with one or more of text segments 612A-612C via user gaze input, it is contemplated that XR system 602 can alternatively or additionally determine an intent to interact based on button input, user gesture input, a user's audible announcement, or any combination thereof, as described further herein with respect to Figure 5.

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dial-up connection. Thus, computer-readable media can comprise computer-readable storage media (e.g., "non-transitory" media) and computer-readable transmission media.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations as defined in the appended claims. The specific features and acts described above are disclosed as example forms of implementing the claims that follow. Accordingly, the embodiments and implementations are not limited except as by the appended claims.

## Claims

1. A method for automatically translating text from a first language to a second language, the method comprising:
detecting, by an artificial reality system, one or more text segments, in the first language, in a field-of-view of the artificial reality system in a real-world environment;
automatically translating the one or more text segments from the first language to the second language;
obtaining, by the artificial reality system, user gaze input;
determining an intent to interact with at least a portion of the one or more text segments, in the first language, based on the user gaze input; and
based on the determining the intent to interact with at least the portion of the one or more text segments, selecting, from the automatically translated one or more text segments, one or more translated text segments corresponding to at least the portion of the one or more text segments; and
rendering the at least the selected one or more translated text segments.

2. The method of claim 1, wherein the rendering the selected one or more translated text segments comprises:
positioning the selected one or more translated text segments locked at a location, in the real-world environment, corresponding to a determined location of the at least the portion of the one or more text segments in the first language.

3. The method of claim 1 or claim 2, wherein the rendering the selected one or more translated text segments comprises:
positioning the selected one or more translated text segments locked at a location, in the real-world environment, replacing the at least the portion of the one or more text segments in the first language.

4. The method of any preceding claim, wherein the user gaze input tracks movement of at least one eye of a user of the artificial reality system;
optionally, wherein the intent to interact is a gaze dwell, within a threshold distance of the at least the portion of the translated one or more text inputs, for greater than a threshold amount of time;
optionally, wherein the user gaze input tracks movement of both eyes of the user of the artificial reality system, and wherein the user gaze input further comprises vergence depth of the eyes.

5. The method of any preceding claim, and one or more of the following:
(i) wherein the rendering the at least the portion of the translated one or more text segments comprise audibly announcing the at least the portion of the translated one or more text segments;
(ii) wherein the rendering the at least the portion of the translated one or more text segments comprises displaying the at least the portion of the translated one or more text segments.

6. The method of any preceding claim, further comprising:
selecting a rendering mode, for rendering the at least the portion of the translated one or more text segments, based on one or more contextual factors, the one or more contextual factors comprising one or more preferences for a user of the artificial reality system, one or more situational factors relevant to the real-world environment, or any combination thereof.

7. The method of any preceding claim,
wherein the detecting the one or more text segments is based on one or more first images captured by a first camera, of the artificial reality system, at a first resolution, and
wherein the automatically translating the one or more text segments is based on one or more second images captured by a second camera, of the artificial reality system, at a second resolution higher than the first resolution.

8. The method of any preceding claim, further comprising:
determining that the second language is different than the first language, the first language being associated with a user of the artificial reality system;
wherein the automatically translating the one or more text segments from the first language to the second language is based on the determination that the second language is different than the first language associated with the user of the artificial reality system.

9. A computer-readable storage medium storing instructions, for automatically translating text from a first language to a second language, the instructions, when executed by a computing system, cause the computing system to:
detect, by an artificial reality system, one or more text segments, in the first language, in a field-of-view of the artificial reality system in a real-world environment;
automatically translate the one or more text segments from the first language to the second language;
obtain, by the artificial reality system, user input;
determine an intent to interact with at least a portion of the one or more text segments, in the first language, based on the user input; and
based on the determining the intent to interact with at least the portion of the one or more text segments, select, from the automatically translated one or more text segments, one or more translated text segments corresponding to at least the portion of the one or more text segments; and
render the selected one or more translated text segments.

10. The computer-readable storage medium of claim 9,
wherein the user input comprises user gaze input detected by the artificial reality system, and
wherein determining the intent to interact comprises determining that the user gaze input is directed at the at least the portion of the one or more text segments in the first language.

11. The computer-readable storage medium of claim 9 or claim 10,
wherein the user input comprises gesture input indicative of a gesture made by a user of the artificial reality system, and
wherein determining the intent to interact comprises determining that the gesture is made within a threshold distance of the at least the portion of the one or more text segments.

12. The computer-readable storage medium of any one of claims 9 to 11, wherein the rendering the selected one or more translated text segments comprises:
positioning the selected one or more translated text segments locked at a location, in the real-world environment, corresponding to a determined location of the at least the portion of the one or more text segments in the first language.

13. The computer-readable storage medium of any one of claims 9 to 12, wherein the rendering the selected one or more translated text segments comprises:
positioning the selected one or more translated text segments locked at a location, in the real-world environment, replacing the at least the portion of the one or more text segments in the first language.

14. A computing system for automatically translating text from a first language to a second language, the computing system comprising:
one or more processors; and
one or more memories storing instructions that, when executed by the one or more processors, cause the computing system to:
detect, by an artificial reality system, one or more text segments, in the first language, in a field-of-view of the artificial reality system in a real-world environment;
automatically translate the one or more text segments from the first language to the second language;
obtain, by the artificial reality system, user input;
determine an intent to interact with at least a portion of the one or more text segments, in the first language, based on the user input; and
based on the determining the intent to interact with at least the portion of the one or more text segments, select, from the automatically translated one or more text segments, one or more translated text segments corresponding to at least the portion of the one or more text segments; and
render the selected one or more translated text segments.

15. The computing system of claim 14, wherein the user input comprising user gaze input tracking movement of at least one eye of a user of the artificial reality system;
optionally, wherein the intent to interact is a gaze dwell, within a threshold distance of the at least the portion of the translated one or more text inputs, for greater than a threshold amount of time;
optionally, wherein the user gaze input tracks movement of both eyes of the user of the artificial reality system, and wherein the user gaze input further comprises vergence depth of the eyes.
